# EUROPÄISCHE PATENTSCHRIFT

(11) **EP 4 030 147 B1**
(45) Veröffentlichungstag und Bekanntmachung des Hinweises auf die Patenterteilung: **27.03.2024**
(21) Anmeldenummer: 21201946.7
(22) Anmeldetag: 11.10.2021
(51) Int. Cl.: G01D 5/244, G01D 5/347

(54) **LÄNGENMESSEINRICHTUNG**
LENGTH MEASURING DEVICE
APPAREIL DE MESURE DE LONGUEUR

(30) Priorität: 18.01.2021 DE 102021200417
(43) Veröffentlichungstag der Anmeldung: 20.07.2022
(73) Patentinhaber: Dr. Johannes Heidenhain GmbH, 83301 Traunreut (DE)
(72) Erfinder: NUTZINGER, Tarek, 83377 Vachendorf (DE); MEYER, Hermann, 83458 Schneizlreuth (DE)

(56) Entgegenhaltungen:
- EP-A1- 3 228 993
- DE-A1- 2 929 989
- DE-A1- 3 624 485

## Beschreibung

### GEBIET DER TECHNIK

Die vorliegende Erfindung betrifft eine Längenmesseinrichtung nach dem Oberbegriff des Anspruchs 1.

### STAND DER TECHNIK

Derartige Längenmesseinrichtungen dienen zur Messung von Längen sowie Wegen und werden insbesondere bei Bearbeitungsmaschinen zur Messung der Relativbewegung eines Werkzeugs bezüglich eines zu verarbeitenden Werkstücks, bei Koordinatenmessmaschinen und vermehrt auch in der Halbleiterindustrie eingesetzt.

EP 3 228 993 A1 offenbart eine Längenmesseinrichtung bestehend aus einem Maßstab und einem den Maßstab abtastenden Abtastwagen. Der Abtastwagen ist mittels einer Kupplung in Messrichtung steif, ansonsten beweglich an einem Mitnehmer befestigt. Die Kupplung umfasst ein in Messrichtung verlaufendes Verbindungselement, das an einem ersten Drehgelenk am Abtastwagen und an einem zweiten Drehgelenk am Mitnehmer drehbar gelagert ist. Es ist ein erstes Federmittel zwischen dem Verbindungselement und dem Mitnehmer vorgesehen, das eine Andruckkraft auf den Abtastwagen ausübt und an eine Führungsfläche andrückt. Weiterhin ist ein zweites Federmittel zwischen dem Verbindungselement und dem Abtastwagen vorgesehen, das eine Andruckkraft auf den Abtastwagen ausübt und ebenfalls an die Führungsfläche andrückt. Das erste Federmittel ist von dem zweiten Federmittel in Messrichtung beabstandet angeordnet.

Weitere Längenmesseinrichtungen mit einer Kupplung sind aus EP 2 037 230 B1, EP 1 180 662 B1 und DE 36 24 485 A1 bekannt.

DE 29 29 989 A1 offenbart eine Längenmesseinrichtung nach dem Oberbegriff des Anspruchs 1.

### ZUSAMMENFASSUNG DER ERFINDUNG

Der vorliegenden Erfindung liegt die Aufgabe zugrunde, eine Längenmesseinrichtung anzugeben, die einfach und kompakt aufgebaut ist und mit der eine präzise Positionsmessung ermöglicht wird.

Diese Aufgabe wird erfindungsgemäß durch eine Längenmesseinrichtung mit den Merkmalen des Anspruchs 1 gelöst.

Die erfindungsgemäß ausgebildete Längenmesseinrichtung umfasst einen in Messrichtung längserstreckten Träger mit einem daran angeordneten Maßstab, einen Abtastwagen zur Abtastung einer Messteilung des Maßstabs, wobei der Abtastwagen an zumindest einer Führungsfläche in Messrichtung längsgeführt ist, und eine Kupplung, über die der Abtastwagen in Messrichtung steif und quer dazu nachgiebig an einen Mitnehmer angekoppelt ist. Die Kupplung umfasst ein Koppelelement, das zwischen einer ersten Ankoppelstelle am Abtastwagen und einer zweiten Ankoppelstelle am Mitnehmer angeordnet ist. Das Koppelelement ist an der zweiten Ankoppelstelle über ein Festkörpergelenk am Mitnehmer befestigt. Das Festkörpergelenk ist eine Blattfeder. Das Festkörpergelenk ist dazu ausgebildet, das Koppelelement um eine erste Drehachse, die senkrecht zu einer Ebene der Messteilung verläuft, frei drehbar gegenüber dem Mitnehmer zu tragen. Das Koppelelement hat eine im Vergleich zu Stahl geringere Dichte und/oder einen im Vergleich zu Stahl größeren Elastizitätsmodul.

Beispielsweise hat das Koppelelement eine Dichte im Bereich von 10 bis 80 %, im Bereich von 20 bis 70 % oder im Bereich von 25 bis 65 % der Dichte von Stahl.

Beispielsweise hat das Koppelelement einen Elastizitätsmodul im Bereich von 100 bis 500 GPa, im Bereich von 160 bis 440 GPa oder im Bereich von 250 bis 350 GPa.

Es ist vorteilhaft, wenn die Kupplung eine Kugel umfasst, über die das Koppelelement an der ersten Ankoppelstelle am Abtastwagen angekoppelt ist, wenn das Koppelelement einen Aufnahmebereich zur Aufnahme der Kugel umfasst und wenn der Aufnahmebereich frei von einem Anschlagstift und/oder einem Stift für eine Kugelauflage und derart ausgebildet ist, dass die Kugel in einer Richtung senkrecht zur Messrichtung beweglich ist.

Ferner ist es vorteilhaft, wenn die Kupplung ein plattenförmiges Element zur Verbindung des Festkörpergelenks mit dem Koppelelement umfasst und wenn das Koppelelement mehrere zapfenförmige Elemente aufweist, die sich durch diesen jeweils zugeordnete Öffnungen des plattenförmigen Elements zumindest teilweise hindurch erstrecken.

Vorzugsweise besteht das Koppelelement zum Großteil oder vollständig aus Keramik.

Alternativ kann das Koppelelement zum Großteil oder vollständig aus kohlenstofffaserverstärktem Kunststoff (CFK) bestehen.

Durch die Erfindung werden zum einen eine relativ große Eigensteifigkeit und zum anderen eine relativ geringe Masse des Koppelelements erreicht. Dadurch kann die Lage des Frequenzbands der Eigenfrequenz des Systems signifikant in Richtung höherer Frequenzen verschoben werden. Dies ermöglicht wiederum ein gegenüber dem Stand der Technik verbessertes Frequenzverhalten der Längenmesseinrichtung. Darüber hinaus kann auf ein (zusätzliches) Masse-Feder-System zur Realisierung der Kupplung, dessen Eigenfrequenzen zu einer signifikanten Verschlechterung der Messgenauigkeit in bestimmten Frequenzbändern führen, verzichtet werden. Somit wird einerseits ein einfacher und kompakter Aufbau erreicht, und andererseits wird eine präzise Positionsmessung ermöglicht.

Vorteilhafte Ausbildungen der Erfindung entnimmt man den abhängigen Ansprüchen.

Weitere Einzelheiten und Vorteile der vorliegenden Erfindung werden anhand der nachfolgenden Beschreibung von möglichen Ausführungsbeispielen der Erfindung in Verbindung mit den Figuren erläutert.

### KURZE BESCHREIBUNG DER ZEICHNUNGEN

Es zeigen
- Figur 1: eine Seitenansicht einer Längenmesseinrichtung gemäß einem Ausführungsbeispiel;
- Figur 2: einen Querschnitt der Längenmesseinrichtung nach Figur 1 im Bereich des Koppelelements;
- Figur 3: eine Seitenansicht des Koppelelements der Längenmesseinrichtung nach Figur 1;
- Figur 4: eine weitere Seitenansicht des Koppelelements der Längenmesseinrichtung nach Figur 1 zur Veranschaulichung einer Verbindung des Festkörpergelenks mit dem Koppelelement;
- Figur 5: eine perspektivische Ansicht des Koppelelements der Längenmesseinrichtung nach Figur 1;
- Figur 6: eine Seitenansicht eines Koppelelements einer Längenmesseinrichtung gemäß dem Stand der Technik;
- Figur 7: eine weitere Seitenansicht des Koppelelements der Längenmesseinrichtung gemäß dem Stand der Technik zur Veranschaulichung einer Verbindung eines Festkörpergelenks mit dem Koppelelement; und
- Figur 8: eine perspektivische Ansicht des Koppelelements der Längenmesseinrichtung gemäß dem Stand der Technik mit einem Anschlagstift und einem Stift für eine Kugelauflage.

### BESCHREIBUNG DER AUSFÜHRUNGSFORMEN

Gleiche Elemente oder funktionell gleiche Elemente sind in den Figuren mit gleichen Bezugszeichen versehen.

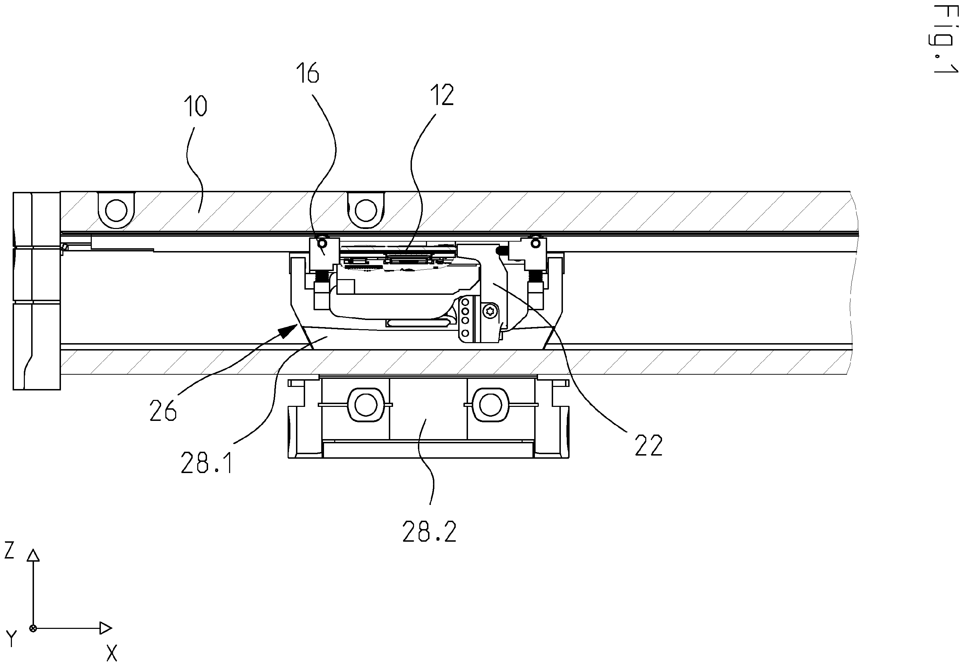

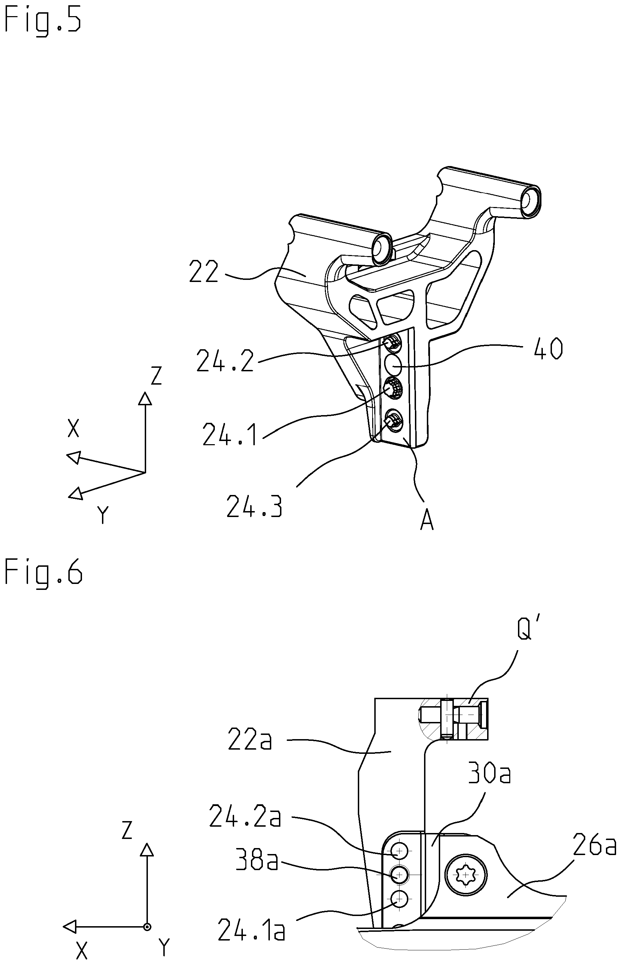

Ein Ausführungsbeispiel wird nachfolgend anhand der Figuren 1 bis 5 erläutert. Die Figuren 6 bis 8 zeigen Komponenten (Elemente) einer bekannten Längenmesseinrichtung. Die Längenmesseinrichtung gemäß dem Ausführungsbeispiel dient zur Messung der Relativlage zweier in Messrichtung X gegeneinander verschiebbarer Objekte. Zur Positionsmessung wird ein Maßstab 12 der Längenmesseinrichtung an einem dieser Objekte befestigt und ein Abtastwagen 16 der Längenmesseinrichtung an dem anderen dieser Objekte befestigt. Dabei wird der Maßstab 12 von dem relativ zum Maßstab 12 in Messrichtung X bewegbaren Abtastwagen 16 abgetastet. Die Längenmesseinrichtung weist einen in Messrichtung X längserstreckten Träger 10 auf. Der Maßstab 12 weist eine Messteilung 14 auf, die von dem Abtastwagen 16 abgetastet wird. Dazu umfasst der Abtastwagen 16 eine Beleuchtungseinheit, die ein Lichtbündel aussendet, das von der Messteilung 14 positionsabhängig moduliert wird und schließlich auf lichtempfindliche Abtastsensoren des Abtastwagens 16 trifft. Die Beleuchtungseinheit und die Abtastsensoren des Abtastwagens 16 sind in den Figuren nicht gezeigt.

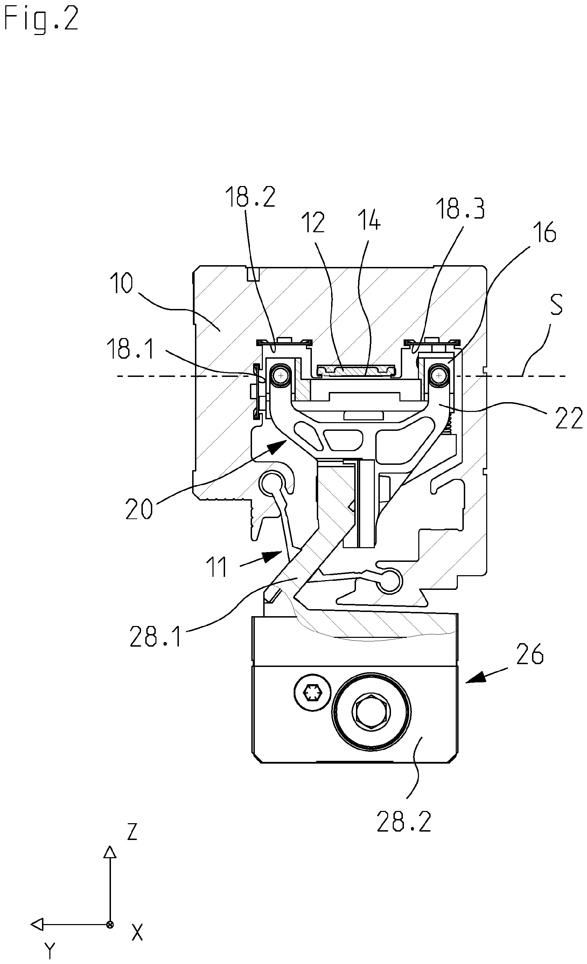

Der Maßstab 12 ist an dem Träger 10 angeordnet. Wie in Figur 2 gezeigt, ist der Träger 10 ein Hohlprofil, in dem der Maßstab 12 und der Abtastwagen 16 geschützt untergebracht sind. Der Maßstab 12 ist dabei in bekannter Weise mit dem Träger 10 verbunden, beispielsweise durch Kleben oder Klemmen. Der als Hohlprofil ausgebildete Träger 10 weist in seiner Längsrichtung in Messrichtung X verlaufend einen Schlitz auf, der durch dachförmig geneigte Dichtlippen 11 verschlossen ist, durch die ein Mitnehmer 26 mit einem schwertförmigen Mittelstück 28.1 hindurchgreift. Der Mitnehmer 26 weist einen Montagebereich 28.2 auf, mit dem er an einem der zu messenden Objekte, beispielsweise einem Schlitten einer Werkzeugmaschine, befestigbar ist.

Der Abtastwagen 16 ist zur exakten Parallelführung längs des Maßstabs 12 an diesem und/oder an dem Träger 10 geführt. Der Abtastwagen 16 stützt sich im gezeigten Ausführungsbeispiel dazu über Führungselemente an mehreren Führungsflächen 18.1 bis 18.3 ab. Die Führungsflächen 18.1 bis 18.3 werden durch an dem Träger 10 befestigte Führungsbänder gebildet. Die Führungsflächen 18.2, 18.3 sind parallel zu einer Ebene S der Messteilung 14 ausgerichtet. Die Führungsfläche 18.1 ist senkrecht zu dieser Ebene S ausgerichtet. Die Führungselemente können Gleitelemente sein, aber insbesondere kugelgelagerte Walzen bzw. Rollen.

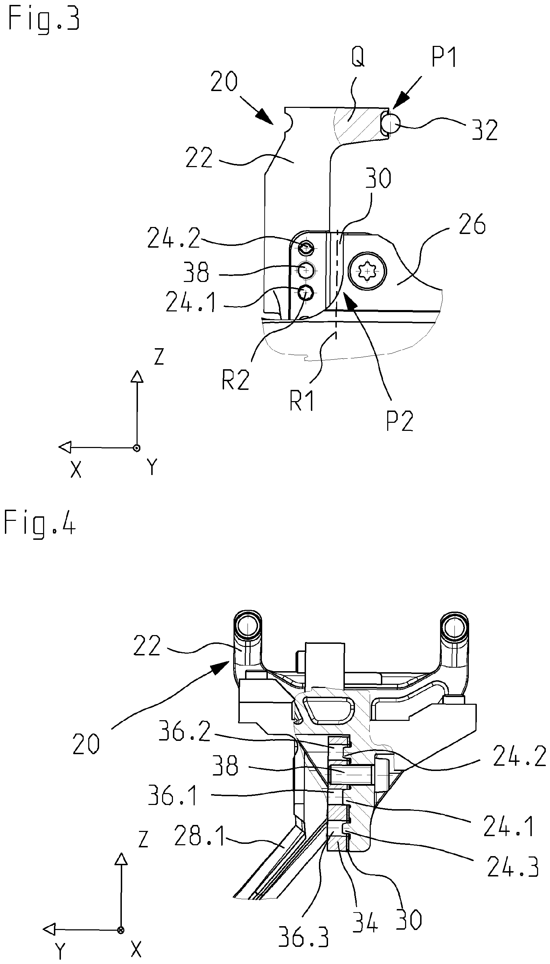

Der Abtastwagen 16 ist über eine Kupplung 20 in Messrichtung X steif und quer dazu nachgiebig an den Mitnehmer 26 angekoppelt. Die Kupplung 20 umfasst ein Koppelelement 22, das zwischen einer ersten Ankoppelstelle P1 am Abtastwagen 16 und einer zweiten Ankoppelstelle P2 am Mitnehmer 26 angeordnet ist (vgl. Figur 3). Das Koppelelement 22 ist an der zweiten Ankoppelstelle P2 über ein Festkörpergelenk 30, das eine Blattfeder ist, am Mitnehmer 26 befestigt. Das Festkörpergelenk 30 ist dazu ausgebildet, das Koppelelement 22 um eine erste Drehachse R1, die senkrecht zur Ebene S der Messteilung 14 verläuft, frei drehbar gegenüber dem Mitnehmer 26 zu tragen. Die Blattfeder besteht insbesondere aus Stahl.

Das Koppelelement 22 hat eine im Vergleich zu Stahl geringere Dichte und/oder einen im Vergleich zu Stahl größeren Elastizitätsmodul. Beispielsweise hat das Koppelelement 22 eine Dichte im Bereich von 10 bis 80 %, im Bereich von 20 bis 70 % oder im Bereich von 25 bis 65 % der Dichte von Stahl. Ferner hat das Koppelelement 22 beispielsweise einen Elastizitätsmodul im Bereich von 100 bis 500 GPa, im Bereich von 160 bis 440 GPa oder im Bereich von 250 bis 350 GPa. Im gezeigten Ausführungsbeispiel besteht das Koppelelement 22 zum Großteil oder bevorzugt vollständig aus Keramik.

Mit Bezug auf Figur 3 ist das Koppelelement 22 im Wesentlichen L-förmig abgewinkelt ausgebildet. Ferner ist das Koppelelement 22 gabelförmig ausgebildet, wobei obere Abschnitte des Koppelelements 22 beidseitig der Messteilung 14 angeordnet sind (vgl. Figur 2). Das Koppelelement 22 erstreckt sich zwischen der ersten und zweiten Ankoppelstelle P1, P2. Die erste Ankoppelstelle P1 und die zweite Ankoppelstelle P2 sind dabei in einer Richtung Z, die senkrecht zur Ebene S der Messteilung 14 verläuft, relativ zueinander versetzt angeordnet.

Vorzugsweise ist die erste Ankoppelstelle P1 einerseits in der Ebene S der Messteilung 14 oder zumindest nahe dieser Ebene S (in Z-Richtung) und andererseits beidseitig der Messteilung 14 (in Y-Richtung) angeordnet. Dies ist insbesondere in Figur 2 veranschaulicht.

Die in Figur 3 gezeigte Kupplung 20 umfasst eine Kugel 32, über die das Koppelelement 22 an der ersten Ankoppelstelle P1 am Abtastwagen 16 angekoppelt ist. Das Koppelelement 22 umfasst einen Aufnahmebereich Q zur Aufnahme der Kugel 32. Im Gegensatz zum Stand der Technik ist der Aufnahmebereich Q frei von einem Anschlagstift und/oder einem Stift für eine Kugelauflage und derart ausgebildet, dass die Kugel 32 in einer Richtung senkrecht zur Messrichtung X (d. h. in der YZ-Ebene) beweglich ist. Hierzu sollte zumindest der Aufnahmebereich Q Keramik aufweisen.

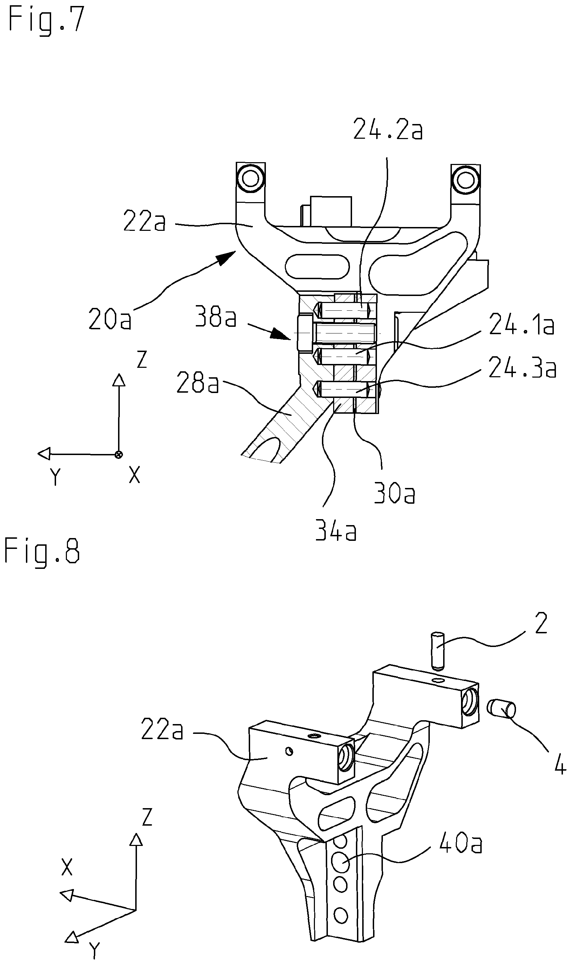

Durch die mit Bezug auf Figur 3 erläuterte Ankopplung an der ersten Ankoppelstelle P1 kann auf die Verwendung eines Anschlagstifts bzw. eines Stifts für eine Kugelauflage (vgl. die Elemente 2 und 4 in Figur 8) verzichtet werden. Dies ermöglicht eine im Vergleich zum Stand der Technik erhebliche Kosteneinsparung bei der Herstellung der Längenmesseinrichtung.

Mit Bezug auf Figur 4 umfasst die Kupplung 20 ein plattenförmiges Element 34, insbesondere eine Stahlplatte, zur Verbindung des Festkörpergelenks 30 mit dem Koppelelement 22. Das plattenförmige Element 34 ist in Blickrichtung auf die Y-Achse im Wesentlichen rechteckförmig ausgebildet. Das Koppelelement 22 weist mehrere zapfenförmige Elemente 24.1 bis 24.3 auf, die sich durch diesen jeweils zugeordnete Öffnungen 36.1 bis 36.3 des plattenförmigen Elements 34 zumindest teilweise hindurcherstrecken. In Figur 4 ist der verbundene Zustand des Festkörpergelenks 30 gezeigt. Im verbundenen Zustand ist das Festkörpergelenk 30 zwischen dem plattenförmigen Element 34 und einem diesem gegenüberliegenden Bereich (vgl. den Bereich A in Figur 5) des Koppelelements 22 angeordnet. Ferner ist im verbundenen Zustand das plattenförmige Element 34 über eine Schraube 38 am Koppelelement 22 befestigt.

Mit Bezug auf Figur 5 weist das Koppelelement 22 ein erstes bis drittes zapfenförmiges Element 24.1 bis 24.3 auf. Die zapfenförmigen Elemente 24.1 bis 24.3 sind in Z-Richtung übereinander angeordnet. Das erste zapfenförmige Element 24.1 ist sternförmig ausgebildet, um das plattenförmige Element 34 über eine dem ersten zapfenförmigen Element 24.1 zugeordnete Öffnung 36.1 (Bohrung) des plattenförmigen Elements 34 zu positionieren. Das zweite und dritte zapfenförmige Element 24.2, 24.3 liegen jeweils beidseitig am Rand einer dem zweiten und dritten zapfenförmigen Element 24.2, 24.3 jeweils zugeordneten Öffnung 36.2, 36.3 (Bohrung) an, um eine Drehung des plattenförmigen Elements 34 um eine zweite Drehachse R2, die in einer Richtung Y parallel zur Ebene S der Messteilung 14 verläuft (vgl. Figur 3), zu verhindern und eine Abstandstoleranz (im Wesentlichen in Z-Richtung) auszugleichen.

Wie in Figur 5 gezeigt, ist dabei das erste zapfenförmige Element 24.1 derart ausgebildet, dass es im Wesentlichen über seinen gesamten Umfang am Rand der Öffnung 36.1 anliegen kann. Ferner sind dabei das zweite und dritte zapfenförmige Element 24.2, 24.3 jeweils derart ausgebildet, dass sie an zwei in X-Richtung gegenüberliegenden Punkten am Rand der Öffnung 36.2 bzw. 36.3 anliegen. In Z-Richtung liegen das zweite und dritte zapfenförmige Element 24.2, 24.3 jedoch nicht an den Rändern der beiden Öffnungen 36.2, 36.3 an.

In Figur 5 ist zudem eine zwischen dem ersten und zweiten zapfenförmigen Element 24.1, 24.2 angeordnete Öffnung 40 gezeigt. Die Öffnung 40 dient zur Aufnahme der Schraube 38 (vgl. Figur 4).

Die im Zusammenhang mit Figur 5 beschriebene Funktion wird auch dann erreicht, wenn eines der beiden zapfenförmigen Elemente 24.2, 24.3 weggelassen wird.

Mit Bezug auf Figur 5 sind das zweite und dritte zapfenförmige Element 24.2, 24.3 auf gegenüberliegenden Seiten der Öffnung 40 bzw. auf gegenüberliegenden Seiten des ersten zapfenförmigen Elements 24.1 angeordnet.

In vorteilhafter Weise sind die zapfenförmigen Elemente 24.1 bis 24.3 durch Anformen an den dem plattenförmigen Element 34 zugewandten Bereich A des Koppelelements 22 gefertigte Elemente. Dadurch entfällt das im Stand der Technik zur Verbindung des Festkörpergelenks 30a mit dem Koppelelement 22a erforderliche Einpressen von Stiften (vgl. die Elemente 24.1a bis 24.3a in Figur 7). Zum Erreichen einer verbesserten (bzw. robusten) Ankopplung des Koppelelements 22 an der zweiten Ankoppelstelle P2 sollten zudem zumindest die zapfenförmigen Elemente 24.1 bis 24.3 Keramik aufweisen.

In den Figuren 6 bis 8 sind entsprechende oder analoge Elemente mit den gleichen Bezugszeichen wie in Figur 1 bis 5, aber zusammen mit dem Buchstaben a, bzw. mit den gleichen Bezugszeichen wie in Figur 1 bis 5, gestrichen, versehen.

Die Verwendung von Keramik für den Großteil (bzw. Hauptanteil) des Koppelelements ermöglicht eine hohe Härte und ausgezeichnete Oberflächenqualität desselben zumindest an der ersten und zweiten Ankoppelstelle P1, P2.

Die Messteilung 14 kann eine Inkrementalteilung sein. Alternativ dazu kann die Messteilung 14 auch eine absolute Teilung sein, beispielsweise ausgebildet als Pseudo-Random-Code.

Die Erfindung ermöglicht eine besonders hochauflösende Positionsmessung, wenn die Messteilung 14 optisch abtastbar ausgebildet ist. Die Messteilung 14 kann alternativ auch magnetisch, induktiv oder kapazitiv abtastbar ausgebildet sein.

## Patentansprüche

1. Längenmesseinrichtung, mit
einem in Messrichtung (X) längserstreckten Träger (10) mit einem daran angeordneten Maßstab (12),
einem Abtastwagen (16) zur Abtastung einer Messteilung (14) des Maßstabs (12), wobei der Abtastwagen (16) an zumindest einer Führungsfläche (18.1 - 18.3) in Messrichtung (X) längsgeführt ist,
einer Kupplung (20), über die der Abtastwagen (16) in Messrichtung (X) steif und quer dazu nachgiebig an einen Mitnehmer (26) angekoppelt ist, wobei die Kupplung (20) ein Koppelelement (22) umfasst, das zwischen einer ersten Ankoppelstelle (P1) am Abtastwagen (16) und einer zweiten Ankoppelstelle (P2) am Mitnehmer (26) angeordnet ist,
wobei das Koppelelement (22) an der zweiten Ankoppelstelle (P2) über ein Festkörpergelenk (30) am Mitnehmer (26) befestigt ist,
**dadurch gekennzeichnet, dass**
das Festkörpergelenk (30) eine Blattfeder ist, wobei das Festkörpergelenk (30) dazu ausgebildet ist, das Koppelelement (22) um eine erste Drehachse (R1), die senkrecht zu einer Ebene (S) der Messteilung (14) verläuft, frei drehbar gegenüber dem Mitnehmer (26) zu tragen, und
das Koppelelement (22) eine im Vergleich zu Stahl geringere Dichte und/oder einen im Vergleich zu Stahl größeren Elastizitätsmodul hat.

2. Längenmesseinrichtung nach Anspruch 1, wobei das Koppelelement (22) eine Dichte im Bereich von 10 bis 80 %, im Bereich von 20 bis 70 % oder im Bereich von 25 bis 65 % der Dichte von Stahl hat.

3. Längenmesseinrichtung nach Anspruch 1 oder 2, wobei das Koppelelement (22) einen Elastizitätsmodul im Bereich von 100 bis 500 GPa, im Bereich von 160 bis 440 GPa oder im Bereich von 250 bis 350 GPa hat.

4. Längenmesseinrichtung nach einem der vorhergehenden Ansprüche, wobei das Koppelelement (22) L-förmig abgewinkelt ausgebildet ist.

5. Längenmesseinrichtung nach einem der vorhergehenden Ansprüche, wobei die erste Ankoppelstelle (P1) und die zweite Ankoppelstelle (P2) in einer Richtung (Z), die senkrecht zur Ebene (S) der Messteilung (14) verläuft, relativ zueinander versetzt angeordnet sind.

6. Längenmesseinrichtung nach einem der vorhergehenden Ansprüche, wobei die Kupplung (20) eine Kugel (32) umfasst, über die das Koppelelement (22) an der ersten Ankoppelstelle (P1) am Abtastwagen (16) angekoppelt ist, wobei das Koppelelement (22) einen Aufnahmebereich (Q) zur Aufnahme der Kugel (32) umfasst, wobei der Aufnahmebereich (Q) frei von einem Anschlagstift und/oder einem Stift für eine Kugelauflage und derart ausgebildet ist, dass die Kugel (32) in einer Richtung senkrecht zur Messrichtung (X) beweglich ist.

7. Längenmesseinrichtung nach Anspruch 6, wobei zumindest der Aufnahmebereich (Q) Keramik aufweist.

8. Längenmesseinrichtung nach einem der vorhergehenden Ansprüche, wobei die Kupplung (20) ein plattenförmiges Element (34) zur Verbindung des Festkörpergelenks (30) mit dem Koppelelement (22) umfasst, wobei das Koppelelement (22) mehrere zapfenförmige Elemente (24.1 - 24.3) aufweist, die sich durch diesen jeweils zugeordnete Öffnungen (36.1 - 36.3) des plattenförmigen Elements (34) zumindest teilweise hindurch erstrecken.

9. Längenmesseinrichtung nach Anspruch 8, wobei das Koppelelement (22) mindestens ein erstes und zweites zapfenförmiges Element (24.1, 24.2) aufweist, die in einer Richtung (Z), die senkrecht zur Ebene (S) der Messteilung (14) verläuft, übereinander angeordnet sind, wobei das erste zapfenförmige Element (24.1) sternförmig ausgebildet ist, um das plattenförmige Element (34) über eine dem ersten zapfenförmigen Element (24.1) zugeordnete Öffnung (36.1) des plattenförmigen Elements (34) zu positionieren, wobei das zweite zapfenförmige Element (24.2) beidseitig am Rand einer dem zweiten zapfenförmigen Element (24.2) zugeordneten Öffnung (36.2) anliegt, um eine Drehung des plattenförmigen Elements (34) um eine zweite Drehachse (R2), die in einer Richtung (Y) parallel zur Ebene (S) der Messteilung (14) verläuft, zu verhindern und eine Abstandstoleranz auszugleichen.

10. Längenmesseinrichtung nach Anspruch 8 oder 9, wobei die zapfenförmigen Elemente (24.1 - 24.3) durch Anformen an einen dem plattenförmigen Element (34) zugewandten Bereich (A) des Koppelelements (22) gefertigte Elemente sind.

11. Längenmesseinrichtung nach einem der Ansprüche 8 bis 10, wobei zumindest die zapfenförmigen Elemente (24.1 - 24.3) Keramik aufweisen.

12. Längenmesseinrichtung nach einem der Ansprüche 8 bis 11, wobei das plattenförmige Element (34) eine Stahlplatte ist.

13. Längenmesseinrichtung nach einem der vorhergehenden Ansprüche, wobei das Koppelelement (22) zum Großteil oder vollständig aus Keramik besteht.

14. Längenmesseinrichtung nach einem der vorhergehenden Ansprüche, wobei die Blattfeder aus Stahl besteht.

## Claims

1. Length measuring device comprising
a carrier (10) which extends longitudinally in a measuring direction (X) and has a scale (12) arranged thereon,
a scanning carriage (16) for scanning a measuring graduation (14) of the scale (12), the scanning carriage (16) being longitudinally guided on at least one guide surface (18.1-18.3) in the measuring direction (X),
a coupling (20) via which the scanning carriage (16) is rigidly coupled to a driver (26) in the measuring direction (X) and is coupled in a flexible manner to the driver (26) transversely to the measuring direction (X), the coupling (20) comprising a coupling element (22) which is arranged between a first coupling point (P1) on the scanning carriage (16) and a second coupling point (P2) on the driver (26),
wherein, at the second coupling point (P2), the coupling element (22) is attached to the driver (26) via a flexure joint (30),
**characterized in that**
the flexure joint (30) is a leaf spring, the flexure joint (30) being designed to carry the coupling element (22) freely rotatably in relation to the driver (26) about a first axis of rotation (R1) which runs perpendicularly to a plane (S) of the measuring graduation (14), and
the coupling element (22) has a lower density than steel and/or a higher modulus of elasticity than steel.

2. Length measuring device according to Claim 1, wherein the coupling element (22) has a density in the range of 10 to 80%, in the range of 20 to 70%, or in the range of 25 to 65% of the density of steel.

3. Length measuring device according to Claim 1 or 2, wherein the coupling element (22) has a modulus of elasticity in the range of 100 to 500 GPa, in the range of 160 to 440 GPa, or in the range of 250 to 350 GPa.

4. Length measuring device according to one of the preceding claims, wherein the coupling element (22) has an L-shaped design.

5. Length measuring device according to one of the preceding claims, wherein the first coupling point (P1) and the second coupling point (P2) are arranged offset in relation to each other in a direction (Z) perpendicular to the plane (S) of the measuring graduation (14).

6. Length measuring device according to one of the preceding claims, wherein the coupling (20) comprises a ball (32) via which the coupling element (22) is coupled to the scanning carriage (16) at the first coupling point (P1), wherein the coupling element (22) comprises a receiving region (Q) for receiving the ball (32), and wherein the receiving region (Q) is free of a stop pin and/or of a pin for a ball support and is designed in such a way that the ball (32) is movable in a direction perpendicular to the measuring direction (X).

7. Length measuring device according to Claim 6, wherein at least the receiving region (Q) has ceramic.

8. Length measuring device according to one of the preceding claims, wherein the coupling (20) comprises a plate-shaped element (34) for connecting the flexure joint (30) to the coupling element (22), and wherein the coupling element (22) has a plurality of pin-shaped elements (24.1-24.3) which extend at least partially through respectively associated openings (36.1-36.3) of the plate-shaped element (34).

9. Length measuring device according to Claim 8, wherein the coupling element (22) has at least a first and a second pin-shaped element (24.1, 24.2) arranged one above the other in a direction (Z) perpendicular to the plane (S) of the measuring graduation (14), wherein the first pin-shaped element (24.1) is star-shaped so as to position the plate-shaped element (34) via an opening (36.1) of the plate-shaped element (34) associated with the first pin-shaped element (24.1), wherein the second pin-shaped element (24.2) rests on both sides against the edge of an opening (36.2) associated with the second pin-shaped element (24.2), so as to prevent rotation of the plate-shaped element (34) about a second axis of rotation (R2), which runs in a direction (Y) parallel to the plane (S) of the measuring graduation (14), and to compensate for a distance tolerance.

10. Length measuring device according to Claim 8 or 9, wherein the pin-shaped elements (24.1-24.3) are elements manufactured by integral moulding onto a region (A) of the coupling element (22) facing the plate-shaped element (34) .

11. Length measuring device according to one of Claims 8 to 10, wherein at least the pin-shaped elements (24.1-24.3) have ceramic.

12. Length measuring device according to one of Claims 8 to 11, wherein the plate-shaped element (34) is a steel plate.

13. Length measuring device according to one of the preceding claims, wherein the coupling element (22) is made largely or completely of ceramic.

14. Length measuring device according to one of the preceding claims, wherein the leaf spring is made of steel.

## Revendications

1. Appareil de mesure de longueur, ayant
un support (10) s'étendant longitudinalement dans la direction de mesure (X) et sur lequel est agencée une règle de mesure (12),
un chariot de scannage (16) pour scanner une graduation de mesure (14) de la règle (12), le chariot de scannage (16) étant guidé longitudinalement dans la direction de mesure (X) sur au moins une surface de guidage (18.1 - 18.3),
un accouplement (20) par lequel le chariot de scannage (16) est couplé à un organe d'entraînement (26) de manière rigide dans la direction de mesure (X) et de manière flexible transversalement à celle-ci, l'accouplement (20) comprenant un élément d'accouplement (22) qui est agencé entre un premier point d'accouplement (P1) sur le chariot de scannage (16) et un deuxième point d'accouplement (P2) sur l'organe d'entraînement (26),
l'élément d'accouplement (22) étant fixé à l'organe d'entraînement (26) au niveau du deuxième point d'accouplement (P2) par l'intermédiaire d'une articulation à corps solide (30),
**caractérisé en ce que**
l'articulation à corps solide (30) est un ressort à lame, l'articulation à corps solide (30) étant conçue pour supporter l'élément d'accouplement (22) de manière à ce qu'il puisse tourner librement par rapport à l'organe d'entraînement (26) autour d'un premier axe de rotation (R1) qui s'étend perpendiculairement à un plan (S) de la graduation de mesure (14), et
l'élément d'accouplement (22) a une densité inférieure à celle de l'acier et/ou un module d'élasticité supérieur à celui de l'acier.

2. Appareil de mesure de longueur selon la revendication 1, dans lequel l'élément d'accouplement (22) a une densité comprise entre 10 et 80 %, comprise entre 20 et 70 % ou comprise entre 25 et 65 % de la densité de l'acier.

3. Appareil de mesure de longueur selon la revendication 1 ou 2, dans lequel l'élément d'accouplement (22) a un module d'élasticité compris entre 100 et 500 GPa, compris entre 160 et 440 GPa ou compris entre 250 et 350 GPa.

4. Appareil de mesure de longueur selon l'une des revendications précédentes, dans lequel l'élément d'accouplement (22) est conçu de façon coudée selon une forme de L.

5. Appareil de mesure de longueur selon l'une des revendications précédentes, dans lequel le premier point d'accouplement (P1) et le deuxième point d'accouplement (P2) sont décalés l'un par rapport à l'autre dans une direction (Z) qui est perpendiculaire au plan (S) de la graduation de mesure (14).

6. Appareil de mesure de longueur selon l'une des revendications précédentes, dans lequel l'accouplement (20) comprend une bille (32) par l'intermédiaire de laquelle l'élément d'accouplement (22) est couplé au premier point d'accouplement (P1) sur le chariot de scannage (16), l'élément d'accouplement (22) comprenant une zone de réception (Q) pour recevoir la bille (32), la zone de réception (Q) étant exempte d'une tige de butée et/ou d'une tige pour un appui de bille, et étant conçue de telle sorte que la bille (32) est mobile dans une direction perpendiculaire à la direction de mesure (X) .

7. Appareil de mesure de longueur selon la revendication 6, dans lequel au moins la zone de réception (Q) comporte de la céramique.

8. Appareil de mesure de longueur selon l'une des revendications précédentes, dans lequel l'accouplement (20) comprend un élément en forme de plaque (34) pour relier l'articulation à corps solide (30) à l'élément d'accouplement (22), l'élément d'accouplement (22) présentant plusieurs éléments en forme de tenons (24.1 - 24.3) qui s'étendent au moins partiellement à travers des ouvertures (36.1 - 36.3) de l'élément en forme de plaque (34) qui leur sont respectivement associées.

9. Appareil de mesure de longueur selon la revendication 8, dans lequel l'élément d'accouplement (22) présente au moins un premier et un deuxième élément en forme de tenon (24.1, 24.2) qui sont agencés l'un au-dessus de l'autre dans une direction (Z) qui s'étend perpendiculairement au plan (S) de la graduation de mesure (14), le premier élément en forme de tenon (24.1) étant réalisé en forme d'étoile pour positionner l'élément en forme de plaque (34) sur une ouverture (36.1) de l'élément en forme de plaque (34) associée au premier élément en forme de tenon (24.1), le deuxième élément en forme de tenon (24.2) s'appuyant des deux côtés sur le bord d'une ouverture (36.2) associée au deuxième élément en forme de tenon (24.2), afin d'empêcher une rotation de l'élément en forme de plaque (34) autour d'un deuxième axe de rotation (R2), qui s'étend dans une direction (Y) parallèle au plan (S) de la graduation de mesure (14), et de compenser une tolérance de distance.

10. Appareil de mesure de longueur selon la revendication 8 ou 9, dans lequel les éléments en forme de tenon (24.1 - 24.3) sont des éléments fabriqués par moulage sur une zone (A) de l'élément d'accouplement (22) tournée vers l'élément en forme de plaque (34).

11. Appareil de mesure de longueur selon l'une des revendications 8 à 10, dans lequel au moins les éléments en forme de tenon (24.1 - 24.3) comportent de la céramique.

12. Appareil de mesure de longueur selon l'une des revendications 8 à 11, dans lequel l'élément en forme de plaque (34) est une plaque d'acier.

13. Appareil de mesure de longueur selon l'une des revendications précédentes, dans lequel l'élément d'accouplement (22) est en grande partie ou entièrement en céramique.

14. . Appareil de mesure de longueur selon l'une des revendications précédentes, dans lequel le ressort à lame est en acier.
